# EUROPEAN PATENT SPECIFICATION

(11) **EP 1 710 023 B1**
(45) Date of publication and mention of the grant of the patent: **26.09.2007**
(21) Application number: 05425187.1
(22) Date of filing: 31.03.2005
(51) Int. Cl.: B07B 1/15

(54) **Agricultural machine, in particular olive-picker and similar products**
Landwirtschaftliche Maschine, insbesondere Erntegerät für Oliven und dergleichen Produkte
Machine agricole, en particulier récolteur d'olives et de produits similaires.

(43) Date of publication of application: 11.10.2006
(73) Proprietor: Bosco Vittorio di Bosco Marco & C. S.N.C., 27026 Garlasco (Pavia) (IT)
(72) Inventor: Bosco, Marco, 27026 Garlasco (Pavia) (IT)
(74) Representative: Ponzellini, Gianmarco

(56) References cited:
- FR-A- 2 245 271
- FR-A- 2 702 923
- GB-A- 1 065 048
- GB-A- 2 152 853
- US-A- 3 721 345

## Description

The present invention relates to an agricultural machine, and in particular to an olive-picker or a picker for similar products such as walnuts and others; this machine can be either a self-propelled machine or a machine working at a site arbitrarily selected by an operator.

It is known that the operation of gathering and picking up olives from the ground, which olives have been previously shaken from one or more trees is usually carried out by a team of at least four or five workers that respectively operate with different machines (powered sweepers, hand-held blowers, motor pickers, sorting machines and at least one tractor with a trailer connected thereto) in order to move the fruits away from the tree trunk (that, on the other hand, as far as a particular cultivation such as olive growing is concerned, can be not very tall relative to the ground and therefore is not very adapted to enable passage of a human operator under the leafy branches thereof) and prepare a series of heaps of heterogeneous material disposed in a more or less orderly manner on the ground (in jargon usually referred to as "tiers") that not only consist of olives but are also comprised of earth, stones, leaves and/or broken branches and others.

It is known from FR2702923 a picker vehicle having a gathering brush, a first conveyor and a sorting drum of frustoconical shape; such a vehicle exploits an air flow coming from a blower in order to reject the collected leaves and lightweight waste at the rear of the vehicle. In this prior art reference, a relatively low separation efficiency is achieved by the frustoconical sorting drum, which is also huge and therefore implies having a very large frame (resulting in bad handling of the vehicle itself).

It is also known from GB2152853 a roller screen for separating soil/stones from potatoes: such a screen has a plurality of spaced rotating rolls surrounded by respective springs/screws whose internal diameter is larger than the external diameter of the roll. These springs/screws are not in mutual contact in correspondence of their maximum-diameter portions, so that each object which has a dimension smaller than the free gap between the screws themselves is free to fall beneath the roller screen, thereby reducing greatly its efficiency.

Finally, it is known from US3721345 a "potato selector" having sizing deck made up of longitudinally extending screw rolls rotatably mounted in mutually spaced, side-by-side relationship: such screw rolls do not touch each other in operative conditions, therefore also in this case a low filtration/separation efficiency is expected.

In order to enable a suitable sorting out of the agricultural products from the waste product, separating means 5 is conveniently present, said means being operatively interposed between the storage assembly 4 and picker assembly 3; advantageously this separating means 5 comprises at least one rotary element 5b (defined along an extension axis 5c) having a plurality of grooves 5d and/or ridges 5e helically extending around said extension axis 5c; in this way only the agricultural products having the same size as or a size smaller than said grooves 5d can pass.

Due to the particular conformation of the worm-screw bodies, the ridges of two adjacent bodies move in a particular mutual kinematic relationship and therefore enable accomplishment of a displacement action of all objects in the mass of heterogeneous material that have a greater size than the section of passages 6 that in turn are dynamically defined by corresponding grooves of two adjacent worm-screw bodies.

Therefore, an at least rough separation of the olives from the rest of the waste materials is required: to this aim, the sorting machines of known type are provided with suitable sieve filters that substantially consist of perforated or grid-like elements which are set in constant vibration (or which are alternatively rotated therefore carrying out a centrifugal operation); in this way, olives are separated from the bigger elements (branches and/or leaves and/or stones and/or earth clods that do not succeed in passing through the holes or grids) and fall into a suitable collector.

The known art briefly described above however has some limits.

In fact, the presence of a numerous team of workers involves a very complex work management and a great increase in the manpower costs; in parallel, the presence of a great number of different machines involves a further increase in the management and servicing problems and in addition different operators specialised in use of several different machines need to be available.

Furthermore, the sieve filters and vibration or rotary screens of known type are not accurate enough to also enable an efficient separation of the olives from the other small foreign bodies: for instance, the turned soil that is not formed into clods may in any case pass through the holes or grids, and it may also happen that small branches oriented in a particular direction as well as hashed leaves are not retained by the sieve.

A further drawback of the machines hitherto used is given by the fact that the vibration or rotary screens are in any case subjected to "flooding" or clogging problems, resulting from the fact that under particular operating conditions (for example, olive-picking in winter on soils rich in clayey mud) the passage ports of the filters and/or the screens are clogged with the earth material.

It is to be noted that clogging of the vibration screens/filters of known type can also cause an undesirable scattering of the agricultural products that are thrown out of the screen/filter itself exactly due to the fact that the passage ports through which said products should pass are occluded by the waste material; this involves an important decline in picking efficiency.

Due to the poor efficiency of the sieve filters it becomes therefore necessary to carry out further separation and/or cleaning operations that must be done at a subsequent time relative to picking and therefore cause an increase in costs and an obstacle in olive production/working.

Mainly, it is an aim of the present invention to provide an agricultural machine, and in particular an "olive-picker" or a picking machine for similar fruits that is able to eliminate or at least minimise the mentioned drawbacks.

More particularly, the present invention aims at conceiving an agricultural machine simultaneously enabling a given mass of heterogeneous material to be picked up from the ground and the olives to be separated from said mass of material very quickly and with great accuracy.

The present invention also aims at conceiving an agricultural machine that can operate with great flexibility, has a simple and reliable structure and reduced costs in terms of purchase and management.

Still from the point of view of efficiency, it is an aim of the present invention to provide an agricultural machine offering a great efficiency in the picking operation (or in other words, an amount of agricultural products "wrongly" discarded that is as small as possible) and enabling the quality of the picked agricultural product to be maximised.

A not least aim of the present invention is to provide an agricultural machine enabling a single person to carry out, in an independent and complete manner, the whole work of setting the material heaps (the so-called tier-forming operation) and subsequently picking up the agricultural products and separating them from the waste products, thus obtaining an important reduction in the gathering/picking times and an improvement in the quality of the agricultural product.

The technical task mentioned (and other aims specified in the following) are substantially achieved by an agricultural machine having the features set out in one or more of the appended claims.

The description of a preferred but not exclusive embodiment of an agricultural machine in accordance with the invention is now taken hereinafter by way of non-limiting example and shown in the accompanying drawings, in which:
- Fig. 1 is a diagrammatic side view of a first embodiment of the agricultural machine in accordance with the present invention;
- Fig. 2 is a top view of the machine shown in Fig. 1; and
- Fig. 3 is a diagrammatic view of a construction detail of the machine in accordance with the present invention.

With reference to the drawings, the agricultural machine in accordance with the invention is generally denoted at 1.

It substantially comprises a frame 2 which can house at least one power unit (to make the machine 1 a self-propelled machine and/or cause operation of the moving parts designed to pick the agricultural products up): obviously, should the machine 1 be of the self-propelled type, suitable means for movement of the machine 1 in at least one running direction relative to the ground will be present (hydrostatic and/or mechanical transmission means or others).

In any case, within the scope of the present invention the machine 1 can be set in operation at fixed sites and in this case it will be equipped with suitable means to enable towing or at all events displacement of same.

At all events, with reference to the accompanying drawings, a suitable set of driving and/or steering wheels "R" is present, as well as a driving place "PG" accessible to an operator, a (diagrammatically shown) motor "M", and finally a holding unit "O" for the oil and/or all that can be used to operate the mechanical parts of the machine 1.

Also present is a picker assembly 3 connected to frame 2 and designed to pick up a mass of heterogeneous material (that typically may comprise a given number or amount of agricultural products such as walnuts, olives or similar fruits, and a series of different waste products such as soil, organic material lumps, dry and/or cut branches, leaves, grass, turned earth clods, stones and so on); operatively interlocked with said picker assembly 3 is a storage assembly 4 the main task of which is to receive the above mentioned agricultural products.

In order to enable a suitable sorting out of the agricultural products from the waste product, separating means 5 is conveniently present, said means being operatively interposed between the storage assembly 4 and picker assembly 3; advantageously this separating means 5 comprises at least one rotary element 5b (defined along an extension axis 5c) having a plurality of grooves 5d and/or ridges 5e helically extending around said extension axis 5c; in this way only the agricultural products having the same size as or a size smaller than said grooves 5d can pass.

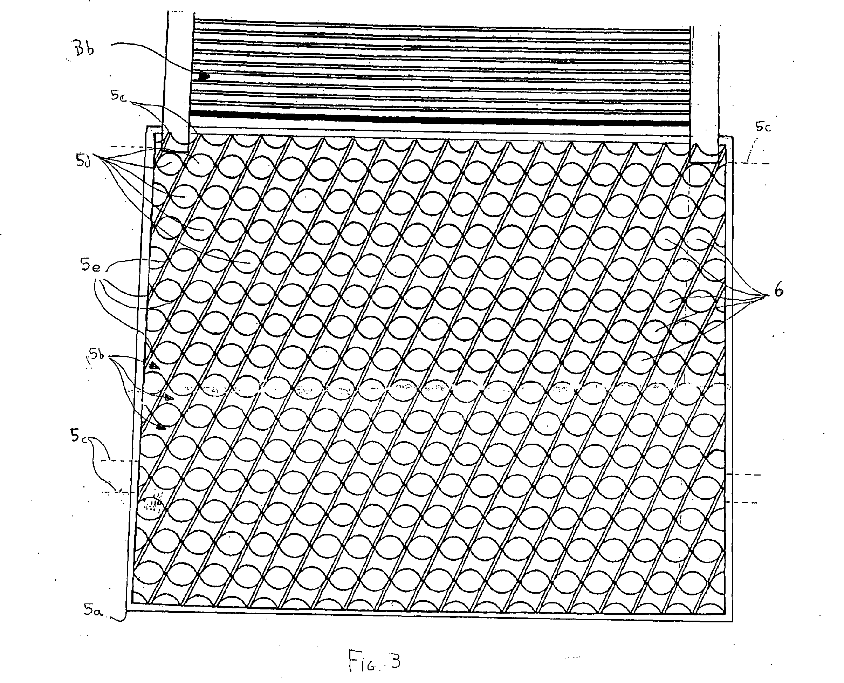

According to a particularly appreciable embodiment of the present invention (see Fig. 3), the separating means 5 comprises a plurality of rotary elements 5b disposed in mutual parallelism relationship and with a given pitch between two adjacent elements; in this manner, pairs of rotary elements 5b in co-operation define a plurality of passages by drop 6 having a predetermined size corresponding to a given dimension of an agricultural product to be sorted out.

From a structural point of view, in order to maintain the correct mutual positioning of the rotary elements 5b and offer the necessary pivot pins to the latter, also present is a delimiting element 5a defining an operating perimeter, so that at least one, and preferably all the rotary elements 5b are subtended between two points of this delimiting element 5a.

In terms of operation it is therefore possible to notice that the present invention is different from the vibration sieve filters described in the known art; in fact, by virtue of the co-ordinated rotation of the elements 5b, oscillatory motions are not induced but the separation between the agricultural products and waste products is carried out based on a mere geometrical comparison. In the present invention, all the material that is over the separating means 5 and has bigger sizes than those of the passages by drop 6 does not go beyond the lying surface of the separating means 5 but floats over them and is transported until the edges of the delimiting element 5a exactly due to the continuous rotatory motion of the elements 5b.

Conveniently, the elements 5b can be of any shape provided they define the previously mentioned ridges and grooves, or in other words provided they enable passages 6 to be defined: for example, one or more rotary elements 5b (and in particular, all rotary elements 5b) can consist of a volute body (also known as "worm-screw body") having a predetermined pitch and predetermined maximum and minimum diameters.

Obviously, within the scope of the present invention other construction architectures for the rotary elements 5b are possible; for instance, a series of camshafts or crankshafts can be arranged, or a series of rotating shafts carrying a plurality of disks of any diameter depending on the operating requirements.

Due to the particular conformation of the worm-screw bodies, the ridges of two adjacent bodies move in a particular mutual kinematic relationship and therefore enable accomplishment of a displacement action of all objects in the mass of heterogeneous material that have a greater size than the section of passages 6 that in turn are dynamically defined by corresponding grooves of two adjacent worm-screw bodies.

It is also to be pointed out that the position of the passages by drop 6 defined by adjacent worm screws can dynamically vary in time, both by effect of the co-ordinated rotations of said worm screws and due to a possible variation in the relative positions of the bodies 5b.

In order to, on the one hand, maximise the sorting effect (depending on the size) and on the other hand, make transportation of the waste products towards the edges of the delimiting element 5a as efficient as possible, the adjacent rotating bodies 5b, above all in the worm-screw embodiment, are set in rotation in the same direction under operating conditions.

In any case, should particular requirements made it necessary, it is possible to impart any distribution of rotation directions to the rotating elements 5b; for instance, opposite rotation ways can be imposed to two adjacent rotating elements 5b and so on.

At the same time, the delimiting element 5a too can be of any shape, depending on current requirements.

Conveniently, this shape can correspond to an edge of a rubbish skip and can be of quadrangular configuration seen in plan view; in this geometrical configuration the rotary elements 5b are therefore subtended between opposite sides of the delimiting element 5a itself.

Still within the scope of the present invention, the separating means 5 can consist of a single substructure or several identical sub-structures cooperating with each other; for example in a particularly efficient embodiment of the present invention the separating means 5 can advantageously comprise two distinct series of rotary elements. In fact, a first series of rotary elements can be suitably set (for example in such a manner that the elements belonging to this first series are disposed in a first orientation and lie in a first plane), whereas at least one second series of rotary elements can be such arranged relative to the first one that it maximises the separating effect between agricultural and waste products.

To this aim the second series of rotary elements can provide for said rotary elements to be disposed in a second orientation that is transverse, and preferably perpendicular, to the "first" orientation of the rotary elements of the first series; at the same time, the second series of rotary elements is disposed in a second lying plane that is offset from and preferably smaller than the "first" lying plane of the first series of rotary elements.

Due to the just described architecture, each possible waste product succeeding in passing through the first series of rotary elements will, along its travel, encounter an "obstacle" having a different geometry; in this way the waste products are much more likely not to be picked up together with the agricultural products.

In accordance with a further particular aspect of the present invention, it is also possible that the first series of rotary elements should have a first distance between centres of adjacent rotary elements (or, in other words, that the first series of rotary elements, worm-screw elements for example, should define a first series of passages by drop having a first size) whereas the second series of rotary elements will have a second different distance between centres of adjacent rotary elements, said second distance being preferably smaller than said first distance between centres; in this way a second series of passages by drop is defined that is disposed under the first series, said passages not only being disposed in offset rows relative to the rows of the passages by drop of the first series, but also having a different size.

By virtue of the just described architecture that is at least on two levels, the filtering/separating efficiency is greatly increased.

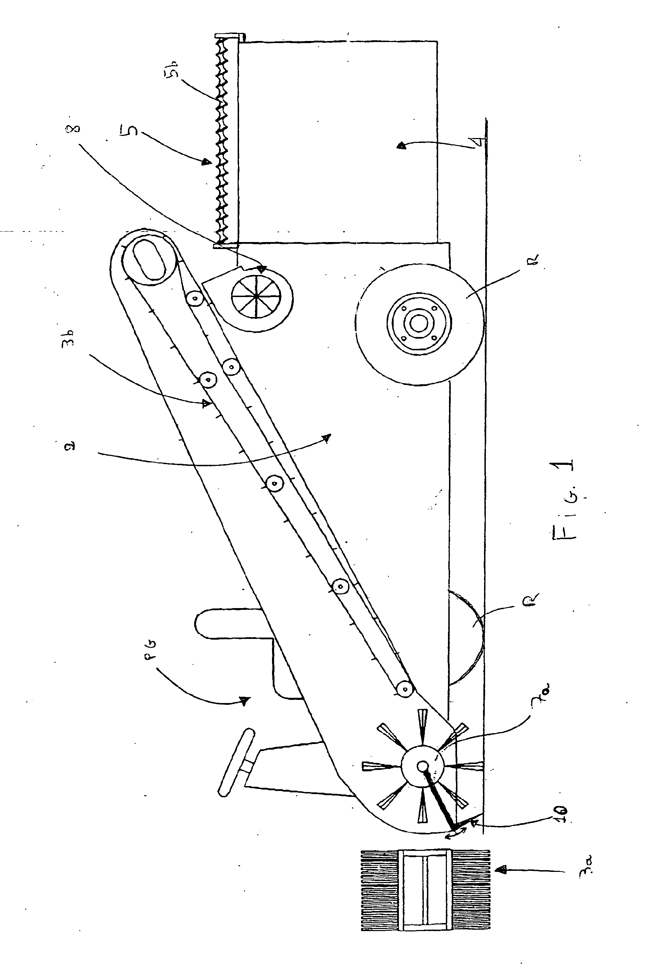

For picking the heterogeneous material from the ground, further structural and operational elements are also present on the machine 1; for example, shown in Fig. 1 is a front sweeping/tier-forming group 3a based on a roller brush operating along a direction perpendicular to the advancing direction of the machine 1; the sweeping/tier forming group 3a belongs for operation to the picker assembly 3 and is disposed in front of the frame 2.

The sweeping/tier-forming group 3a can be operatively activated on masses of heterogeneous material to be picked that are placed on the ground (preferably gathered in rows disposed in an orderly manner, known in the agricultural field as "tiers").

Also present is a mounting ramp 3b that is disposed longitudinally of the frame 2 and has a first end arranged close to said front sweeping/tier-forming group 3a and a second end opposite to the first one and disposed close to the separating means 5 (preferably, at the storage assembly 4).

In order to carry out a first separation between agricultural products and waste products, the mounting ramp 3b comprises a grid-like or grated belt continuously movable between the first and second ends; in particular, this grid-like belt defines a plurality of discharge slots of a smaller section that one dimension of an agricultural product to be picked, so as to enable a first separation between agricultural products and waste products (and typically, separation from earth particles, leaves or foreign bodies having smaller sizes than the products to be picked).

In other words, due to the presence of the grid-like belt continuously running along the mounting ramp 3b, all the smallest corpuscles of the products to be picked are screened and dropped onto the ground before reaching the separating means 5.

According to a further particular aspect of the present invention, the inventive machine further comprises sorting means 10 which can be operatively activated between the mounting ramp 3b and a mass of heterogeneous material to be picked from the ground to adjust a gathering height.

It is in fact to be noted that, depending on the conditions and modes for preparing and executing the gathering/picking work, the conformation of the heaps (that can be disposed in an orderly manner or not) of heterogeneous material can be greatly different and in particular can vary to such an extent that the picking machines of known type do not succeed in picking up the whole material mass from the ground, which will bring about a reduction in the picking efficiency.

To obviate the above drawback, the present invention contemplates the presence of suitable structural elements succeeding in adjusting themselves to the different heights of the heaps of heterogeneous material to be picked, so as to enable full picking up of said material from the ground.

In the embodiment shown in the figures, the sorting means 10 comprises a movable partition wall which can be displaced in a reversible manner between a first operating condition (at which it defines a minimum gathering height, or in other words, at which it is in a position of maximum approach relative to the ground) and a second operating condition (at which on the contrary it defines a maximum gathering height or in other words at which it is in a position of maximum height relative to the ground).

Under operating conditions, the above mentioned movable partition wall is raised or lowered through suitable kinematic driving means and in an automatic or manual manner, so as to enable a correct picking of the heterogeneous material.

Still as regards picking up of the heterogeneous material from the ground, the present machine 1 further comprises a first roller brush 7a disposed close to the first end of the mounting ramp 3b and having a substantially horizontal rotation axis; this roller brush practically catches the heterogeneous material and, by rotation/centrifugation, lays it down on the upper face of the mounting ramp 3b.

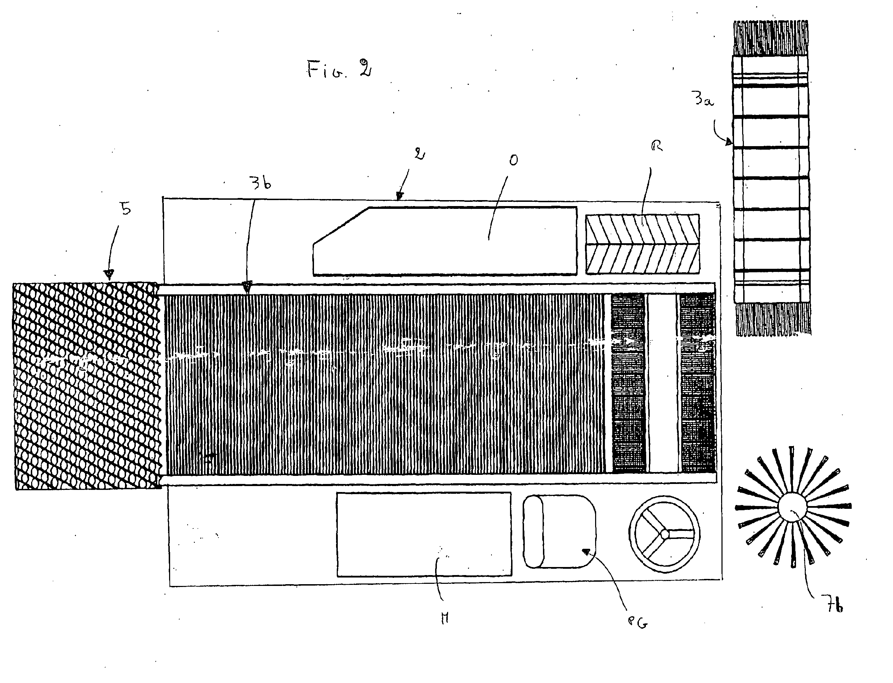

For purposes of maximum accuracy in operation, the presence of a second roller brush 7b may be also provided, said brush being disposed laterally of the front sweeping/tier-forming group 3a and having a rotation axis substantially perpendicular to the ground (see Fig. 2); the second roller brush 7b co-operates with the movable partition wall so as to maximise picking of the heterogeneous material which is then sent onto the mounting ramp 3b by the first roller brush 7a.

Within the scope of the present invention, the first and/or second roller brushes 7a and/or 7b can be replaced by equivalent operational means, provided this means is able to exert a suitable mechanical action for picking up and concentrating the heterogeneous material in the region close to the mounting ramp 3b; for instance, said means may consist of blowers, movable blades or others.

Finally, the present machine is able to carry out a further filtering/separating step between the agricultural products and the waste products, due to the presence of suitable blowing means 8; this blowing means 8 can be operatively activated on a mass of heterogeneous material preferably at the second end of the mounting ramp 3b, to separate objects of reduced weight (leaves, grass or the like) therefrom.

In other words, the blowing means 8 (that can be represented by a blowing fan or other similar device) cause lifting of the light-in-weight materials from the mass of heterogeneous material and project them onto a trajectory that keeps them away from the separating means 5, so that the latter have only to operate on big and heavy waste elements.

The invention achieves important advantages.

In fact, due to the presence of the worm-screw elements, sorting "by drop" of the olives is carried out in co-operation with an efficient orientation and displacement work of a great variety of waste materials; in particular, leaves and branches are retained over the worm-screw elements even when they have particular positions and/or inclinations (and in the same manner, only the earth clods having the same sizes as those of the olives will be able at most to pass).

It is also to be noted that the particular separating mechanism allows scattering of the agricultural products to be prevented, which on the contrary happens with the vibration screens of known type.

Furthermore, due to the absence of parts with a reciprocating motion, vibrations are greatly reduced, which is advantageous for the physical welfare of the agricultural machine's operator and for the lifetime of the different components of the machine itself.

From a structural point of view it is also to be pointed out that the presence of the discharge slots on the mounting ramp enables an efficient separation at least of the earth material even when the latter is particularly viscous (clayey mud and so on) and therefore prevents said mud from the clogging the separating means.

In addition, as a result of the particular features of the invention, a great improvement in the picking work is achieved as said work can be done by a single person operating on a single machinery; in this way it is possible to reduce the picking times and, among other things, to reduce the residence time of the agricultural product on the ground (in other words, it is also possible to improve the quality of the picked product, since the quality of said product is in inverse proportion to duration of the contact time of same with the ground.

It will be finally recognised that the particular construction architecture of the present invention can be carried into effect at low costs, with materials that can be easily worked and mechanical components (for the kinematic articulations and/or powering) that can be easily found on the market.

## Claims

1. An agricultural machine, in particular an olive-picker or a picker for similar fruits, comprising:
- a frame (2) housing at least one power unit and preferably means for driving the machine (1) at least in one running direction relative to the ground;
- a picker assembly (3) connected to said frame (2) and designed to pick up a mass of heterogeneous material comprising a predetermined number of agricultural products, said agricultural products being preferably olives or similar fruits;
- a storage assembly (4) operatively interlocked with said picker assembly (3) and designed to receive said agricultural products; and
- separating means (5) operatively interposed between said storage assembly (4) and picker assembly (3) to sort out the agricultural products from the waste products in said mass of heterogeneous material,
**characterised in that**
- said separating means (5) comprises a plurality of rotary elements (5b), each rotary element (5b) being defined along an extension axis (5c) subtended between two points of a delimiting element (5a) of said separating means and having a plurality of grooves (5d) and ridges (5e) helically extending around said extension axis (5c), said plurality of rotary elements (5b) being disposed in mutual parallelism relationship and with a given pitch between two adjacent elements, pairs of rotary elements (5b) in co-operation defining a plurality of passages by drop (6) having a predetermined size corresponding to a given dimension of an agricultural product to be sorted out, and
- said ridges (5e) of said pairs of rotary elements (5b) being in mutual contact.

2. A machine as claimed in claim 1, **characterised in that** the separating means (5) further comprises a delimiting element (5a) defining an operating perimeter, said at least one rotary element (5b) being preferably subtended between two points of said delimiting element (5a).

3. A machine as claimed in anyone of the preceding claims, **characterised in that** at least one rotary element (5b) and preferably all the rotary elements (5b) consist of a worm-screw body having a predetermined pitch and predetermined maximum and minimum diameters.

4. A machine as claimed in anyone of the preceding claims, **characterised in that** the adjacent rotary bodies (5b) and preferably the worm-screw bodies are set in rotation in the same direction under operating conditions.

5. A machine as claimed in anyone of the preceding claims, **characterised in that** said delimiting element (5a) is of a substantially quadrangular conformation seen in plan view, the rotary elements (5b) being subtended between opposite sides of said delimiting element (5a).

6. A machine as claimed in anyone of the preceding claims, **characterised in that** the separating means (5) comprises:
- a first series of rotary elements disposed in a first orientation and lying in a first plane; and
- at least one second series of rotary elements disposed in a second orientation that is transverse and preferably perpendicular to said first orientation, and lying in a second plane that is offset from and preferably lower than said first lying plane.

7. A machine as claimed in claim 6, **characterised in that** the first series of rotary elements has a first distance between centres of adjacent rotary elements, said second series of rotary elements having a second distance between centres of adjacent rotary elements that is different, preferably smaller than said first distance between centres.

8. A machine as claimed in anyone of the preceding claims, **characterised in that** the picker assembly (3) comprises a front sweeping/tier-forming group (3a) placed ahead of said frame (2) and adapted to be operatively actuated on masses of heterogeneous material disposed on the ground, that are to be picked up, preferably said masses of heterogeneous material being gathered into rows disposed in an orderly manner.

9. A machine as claimed in anyone of the preceding claims, **characterised in that** the picker assembly (3) further comprises a mounting ramp (3b) disposed longitudinally of the frame (2) and having a first end arranged close to said front sweeping/tier-forming group (3a) and a second end opposite to the first one and disposed close to the separating means (5), and preferably at the storage assembly (4).

10. A machine as claimed in claim 9, **characterised in that** said mounting ramp (3b) comprises a grid-like belt continuously movable between said first and second ends, said grid-like belt defining a plurality of discharge slots having a smaller section than one dimension of an agricultural product to be picked up.

11. A machine as claimed in anyone of the preceding claims, **characterised in that** the picker assembly (3) further comprises a first roller brush (7a) disposed close to the first end of the mounting ramp (3b) and having a substantially horizontal rotation axis.

12. A machine as claimed in anyone of the preceding claims, **characterised in that** the picker assembly (3) comprises a second roller brush (7b) disposed laterally of the front sweeping/tier-forming group (3a) and having a rotation axis substantially perpendicular to the ground.

13. A machine as claimed in anyone of the preceding claims, **characterised in that** it further comprises blowing means (8) operatively drivable on a mass of heterogeneous material, preferably in the region close to the second end of the mounting ramp (3b), to separate objects of reduced weight, preferably leaves, grass or the like, therefrom.

14. A machine as claimed in anyone of the preceding claims, **characterised in that** it further comprises sorting means (10) to be operatively actuated between the mounting ramp (3b) and a mass of heterogeneous material to be picked up from the ground to adjust a gathering height.

15. A machine as claimed in claim 10, **characterised in that** said sorting means (10) comprises a movable partition wall which can be displaced in a reversible manner between a first operating condition at which it defines a minimum gathering height, and a second operating condition at which it defines a maximum gathering height.

## Patentansprüche

1. Landwirtschaftliche Maschine, insbesondere Erntegerät für Oliven und dergleichen Produkte, umfassend:
- einen Rahmen (2), der mindestens eine Antriebseinheit und bevorzugter Weise Fortbewegungsmittel der Maschine (1) in mindestens einer Fahrtrichtung gegenüber dem Boden;
- eine Sammelgruppe (3), die mit dem Rahmen (2) verbunden und dazu bestimmt ist, eine Masse an heterogenem Material zu sammeln, das eine vorgegebene Anzahl an landwirtschaftlichen Produkten umfasst, wobei die landwirtschaftlichen Produkte bevorzugter Weise Oliven oder ähnliche Produkte sind;
- eine Einlagerungsgruppe (4), die mit der Sammelgruppe (3) wirksam verbunden und dazu bestimmt ist, die landwirtschaftlichen Produkte aufzunehmen; und
- Trennmittel (5), die zwischen der Einlagerungsgruppe (4) und der Sammelgruppe (3) wirksam zwischengeschaltet sind, um die landwirtschaftlichen Produkte von den Abfällen aus der Masse an heterogenem Material zu trennen,
**dadurch gekennzeichnet, dass**:
- die Trennmittel (5) eine Vielzahl von Drehelementen (5b) umfassen, wobei jedes Drehelement (5b) längs einer Abwicklungsachse (5c) festgelegt ist, die zwischen zwei Stellen eines Begrenzungselementes (5a) der Trennmittel gespannt ist und eine Vielzahl von Kehlen (5d) und Kämmen (5e) aufweist, die sich schraubenförmig um die Abwicklungsachse (5c) erstrecken, wobei die Vielzahl von Drehelementen (5b) zueinander parallel und mit einer bestimmten Steigung zwischen zwei aneinanderliegenden Elementen angeordnet sind, wobei Paare von Drehelementen (5b) in Zusammenwirkung eine Vielzahl von Falldurchgängen (6) festlegen, die eine vorgegebene Abmessung aufweisen, die einem bestimmten Maß eines auszusuchenden landwirtschaftlichen Produktes entspricht, und
- wobei die Kämme (5e) der Paare von Drehelementen (5b) sich gegenseitig berühren.

2. Maschine nach Anspruch 1, **dadurch gekennzeichnet, dass** die Trennmittel (5) überdies ein Begrenzungselement (5a) umfassen, das einen wirksamen Umfang umfasst, wobei das mindestens eine Drehelement (5b) bevorzugter Weise unterhalb zwischen zwei Stellen des Begrenzungselementes (5a) gespannt ist.

3. Maschine nach einem beliebigen der vorstehenden Ansprüche, **dadurch gekennzeichnet, dass** das mindestens ein Drehelement (5b) und bevorzugter Weise alle Drehelemente (5b) aus einem schneckenförmigen Körper bestehen, der eine vorgegebene Steigung und vorgegebene Höchst- und Mindestdurchmesser aufweist.

4. Maschine nach einem beliebigen der vorstehenden Ansprüche, **dadurch gekennzeichnet, dass** die aneinanderliegenden Drehelemente (5b) und bevorzugter Weise die schneckenförmigen Körper im gleichen Sinne unter Arbeitsbedingungen in Drehung versetzt sind.

5. Maschine nach einem beliebigen der vorstehenden Ansprüche, **dadurch gekennzeichnet, dass** das Begrenzungselement (5a) in Draufsicht eine im Wesentlichen rechteckige Form besitzt, wobei die Drehelemente (5b) unterhalb zwischen zwei abgewandten Seiten des Begrenzungselementes (5a) gespannt sind.

6. Maschine nach einem beliebigen der vorstehenden Ansprüche, **dadurch gekennzeichnet, dass** die Trennmittel (5) umfassen:
- eine erste Reihe von Drehelemente, die gemäß einer ersten Ausrichtung auf einer ersten Ebene angeordnet sind; und
- mindestens eine zweite Reihe von Drehelementen, die gemäß einer zweiten Querausrichtung angeordnet sind und bevorzugter Weise senkrecht zur ersten Ausrichtung und zu einer zweiten versetzten Ebene und bevorzugter Weise unten gegenüber der ersten Ebene angeordnet sind.

7. Maschine nach Anspruch 6, **dadurch gekennzeichnet, dass** die erste Reihe von Drehelementen einen ersten Achsenabstand zwischen den aneinander liegenden Drehelementen aufweist, wobei die zweite Reihe von Drehelementen einen zweiten Achsenabstand zwischen aneinanderliegenden Drehelementen aufweist, der gegenüber dem ersten Achsenabstand verschieden und bevorzugter Weise kleiner ist.

8. Maschine nach einem beliebigen der vorstehenden Ansprüche, **dadurch gekennzeichnet, dass** die Sammelgruppe (3) eine stirnseitige Kehrvorrichtung/Schwadenvorrichtung (3a) umfasst, die gegenüber dem Rahmen (2) vorne angeordnet ist und auf zu erntenden Massen an heterogenem Material wirksam aktivierbar ist, die am Boden liegen, wobei die Massen an heterogenem Material in geordnete Reihen zusammengefasst sind.

9. Maschine nach einem beliebigen der vorstehenden Ansprüche, **dadurch gekennzeichnet, dass** die Sammelgruppe (3) überdies eine Steigrampe (3b) umfasst, die gegenüber dem Rahmen (2) längsangeordnet ist, und ein erstes Ende, das in der Nähe der stirnseitigen Kehrvorrichtung/Schwadenvorrichtung (3a) angeordnet ist, und ein zweites Ende aufweist, das dem ersten abgewandt und im Bereich der Trennmittel (5) und bevorzugter Weise im Bereich der Einlagerungsgruppe (4) angeordnet ist.

10. Maschine nach Anspruch 9, **dadurch gekennzeichnet, dass** die Steigrampe (3b) eine Gitterband umfasst, das ständig zwischen dem ersten und dem zweiten Ende beweglich ist, wobei das Gitterband eine Vielzahl von Entladungslanglöchern festlegt, die einen Querschnitt besitzen, der kleiner ist als die Messung eines zu erntenden landwirtschaftlichen Produktes.

11. Maschine nach einem beliebigen der vorstehenden Ansprüche, **dadurch gekennzeichnet, dass** die Sammelgruppe (3) überdies eine erste, rollenartige Bürste (7a) umfasst, die in der Nähe des ersten Endes der Steigrampe (3b) angeordnet ist und eine im wesentlichen horizontale Drehachse besitzen.

12. Maschine nach einem beliebigen der vorstehenden Ansprüche, **dadurch gekennzeichnet, dass** die Sammelgruppe (3) eine zweite rollenartige Bürste (7b) umfasst, die seitlich zur stirnseitigen Kehrvorrichtung/ Schwadenvorrichtung (3a) angeordnet ist und eine zum Boden im wesentlichen senkrechte Drehachse besitzt.

13. Maschine nach einem beliebigen der vorstehenden Ansprüche, **dadurch gekennzeichnet, dass** sie überdies Blasmittel (8) umfasst, die an einer Masse an heterogenem Material wirksam aktivierbar sind, bevorzugter Weise im Bereich des zweiten Endes der Steigrampe (3b), um von dieser letzteren Gegenstände herabgesetzten Gewichtes, bevorzugter Weise von Blättern oder Gras oder ähnlichem zu trennen.

14. Maschine nach einem beliebigen der vorstehenden Ansprüche, **dadurch gekennzeichnet, dass** sie überdies Auslesemittel (10) umfasst, die zwischen der Steigrampe (3b) einer vom Boden zu sammelnden Masse an heterogenem Material wirksam aktivierbar sind, um eine Sammelhöhe einzustellen.

15. Maschine nach Anspruch 10, **dadurch gekennzeichnet, dass** die Auslesemittel (10) eine bewegliche Wand umfassen, die umkehrbar zwischen einer ersten Arbeitsstellung, in der sie eine Mindestsammelhöhe festlegt und einer zweiten Arbeitsstellung konfigurierbar ist, in der sie eine Höchstsammelhöhe festlegt.

## Revendications

1. Machine agricole, en particulier récolteur d'olives et de produits similaires, comprenant:
- un bâti (2) logeant au moins un bloc moteur et de préférence des moyens pour la mise en route de la machine (1) au moins dans une direction de marche par rapport au sol;
- un groupe récolteur (3) relié audit bâti (2) et destiné à récolter une masse de matériel hétérogène comprenant un nombre prédéterminé de produits agricoles, lesdits produits agricoles étant de préférence des olives ou des fruits similaires;
- un groupe de stockage (4) assujetti de manière opérante audit groupe récolteur (3) et destiné à recevoir lesdits produits agricoles; et
- des moyens de séparation (5) interposés de manière opérante entre ledit groupe de stockage (4) et le groupe récolteur (3) pour trier les produits agricoles et les séparer des produits de rébus dans ladite masse de matériel hétérogène,
**caractérisée en ce que**:
- lesdits moyens de séparation (5) comportent une pluralité d'éléments rotatifs (5b), chaque élément rotatif (5b) étant défini le long d'un axe d'extension (5c) sous-tendu entre deux points d'un élément de délimitation (5a) desdits moyens de séparation et ayant une pluralité de rainures (5d) et de crêtes (5e) s'étendant en forme d'hélice autour dudit axe d'extension (5c), ladite pluralité d'éléments rotatifs (5b) étant disposée en relation de parallélisme réciproque et selon un pas donné entre deux éléments adjacents, des paires d'éléments rotatifs (5b) en coopération définissant une pluralité de passages par chute (6) ayant une dimension prédéterminée correspondant à une dimension donnée d'un produit agricole à trier, et
- lesdites crêtes (5e) desdites paires d'éléments rotatifs (5b) étant en contact réciproque.

2. Machine selon la revendication 1, **caractérisée en ce que** les moyens de séparation (5) comportent en outre un élément de délimitation (5a) définissant un périmètre opérant, ledit au moins un élément rotatif (5b) étant de préférence sous-tendu entre deux points dudit élément de délimitation (5a).

3. Machine selon l'une quelconque des revendications précédentes, **caractérisée en ce qu'**au moins un élément rotatif (5b) et de préférence tous les éléments rotatifs (5b) se composent d'un corps à vis sans fin ayant un pas prédéterminé et des diamètres maximum et minimum prédéterminés.

4. Machine selon l'une quelconque des revendications précédentes, **caractérisée en ce que** les corps rotatifs adjacents (5b) et de préférence les corps à vis sans fin sont mis en rotation dans la même direction en condition de fonctionnement.

5. Machine selon l'une quelconque des revendications précédentes, **caractérisée en ce que** ledit élément de délimitation (5a) vu en plan a une conformation sensiblement quadrangulaire, les éléments rotatifs (5b) étant sous-tendus entre des côtés opposés dudit élément de délimitation (5a).

6. Machine selon l'une quelconque des revendications précédentes, **caractérisée en ce que** les moyens de séparation (5) comportent:
- une première série d'éléments rotatifs disposés selon une première orientation et dans un premier plan; et
- au moins une deuxième série d'éléments rotatifs disposés selon une deuxième orientation qui est transversale et de préférence perpendiculaire à ladite première orientation, et est disposée dans un deuxième plan qui est décalé et de préférence plus bas que ledit premier plan de disposition.

7. Machine selon la revendication 6, **caractérisée en ce que** la première série d'éléments rotatifs a une première entraxe entre des éléments rotatifs adjacents, ladite deuxième série d'éléments rotatifs ayant une deuxième entraxe entre des éléments rotatifs adjacents qui est différente et de préférence plus petite que ladite première entraxe.

8. Machine selon l'une quelconque des revendications précédentes, **caractérisée en ce que** le groupe récolteur (3) comporte un groupe avant de balayage/formation de rangées (3a) disposé devant ledit bâti (2) et apte à être mis en mouvement sur des masses de matériel hétérogène placées sur le sol, de préférence lesdites masses de matériel hétérogène étant ramassées a former des rangées disposées avec ordre.

9. Machine selon l'une quelconque des revendications précédentes, **caractérisée en ce que** le groupe récolteur (3) comporte en outre une rampe de montée (3b) disposée longitudinalement au bâti (2) et ayant une première extrémité placée à proximité dudit groupe avant de balayage/formation de rangées (3a) et une deuxième extrémité opposée à la première extrémité et disposée à proximité des moyens de séparation (5), et de préférence à proximité du groupe de stockage (4).

10. Machine selon la revendication 9, **caractérisée en ce que** ladite rampe de montée (3b) comporte une bande formant une grille et définissant une pluralité de fentes de déchargement ayant une section plus petite que la dimension d'un produit agricole qui doit être récolté.

11. Machine selon l'une quelconque des revendications précédentes, **caractérisée en ce que** le groupe récolteur (3) comporte en outre un premier balai à rouleau (7a) disposé proche de la première extrémité de la rampe de montée (3b) et ayant un axe de rotation sensiblement horizontal.

12. Machine selon l'une quelconque des revendications précédentes, **caractérisée en ce que** le groupe récolteur (3) comporte un deuxième balai à rouleau (7b) disposé latéralement par rapport au groupe avant de balayage/formation de rangées (3a) et ayant un axe de rotation sensiblement perpendiculaire au sol.

13. Machine selon l'une quelconque des revendications précédentes, **caractérisée en ce qu'**elle comporte en outre des moyens de soufflage (8) qui peuvent être mis en fonctionnement sur une masse de matériel hétérogène, de préférence dans une zone proche de la deuxième extrémité de la rampe de montée (3b), pour séparer de cette dernière les objets de poids réduit, tels que de préférence feuilles, herbe ou similaires.

14. Machine selon l'une quelconque des revendications précédentes, **caractérisée en ce qu'**elle comporte en outre des moyens de triage (10) qui doivent être mis en fonctionnement entre la rampe de montée (3b) et une masse de matériel hétérogène à récolter du sol pour régler la hauteur de la récolte.

15. Machine selon la revendication 10, **caractérisée en ce que** lesdits moyens de triage (10) comportent une cloison mobile qui peut être déplacée entre une première condition de travail à laquelle elle définit une hauteur de récolte minimum et une deuxième condition de travail à laquelle elle définit une hauteur de récolte maximum, et vice versa.
